# EUROPEAN PATENT APPLICATION

(11) **EP 4 786 819 A1**
(43) Date of publication of application: **05.08.2026**
(21) Application number: 26153164.4
(22) Date of filing: 21.01.2026
(51) Int. Cl.: F16H 1/16, F16C 33/08, F16C 33/12, F16H 55/22, F16H 57/021, B66C 23/84

(54) **WORM SLEWING MECHANISM IN LIGHTWEIGHT AND COMPACT DESIGN IN CLOSED OIL BATH CASE**

(30) Priority: 03.02.2025 IT 202500001980
(71) Applicant: Meta Hydraulic S.r.l., 42048 Rubiera (RE) (IT)
(72) Inventor: MANCINI, Moreno, 42048 Rubiera (RE) (IT)
(74) Representative: Preti, Lisa

(57) **Abstract**

The slewing mechanism in a lightweight version is obtained by adopting a lightweight, high-strength alloy as the material for the inner ring and toothed worm gear, while the ability to withstand axial loads and tipping moment is ensured by a radial sliding bearing and two axial sliding centre plates that replace the traditional four-contact row of balls used until now in versions with a steel ring and worm gear.

The transmission of rotation motion occurs through the meshing between a steel worm screw, driven by an electric or hydraulic motor, and a helical worm gear made of light alloy whose teeth have special wearproof anodising treatment; the closed housing, provided with suitable sealing systems, ensures oil bath lubrication of both the meshing and the bearings.

## Description

The object of the present invention is a worm slewing mechanism in a preferred lightweight embodiment to meet the limited weight requirement in the application intended to support and rotate the structure at height and the basket of an aerial platform.

In the evolution of aerial platforms from the point of view of the support and rotation function of the basket holder arm, over the years, in particular in the type applied to vehicles, use has passed from a base bearing (in jargon slewing centre plate) with toothed ring rotated by the pinion at the exit of a gearmotor, all more or less protected by a sheet metal housing, to the solution of a slewing mechanism in a closed housing and usually lubricated with grease.

In this second solution, the rotation and support function of the basket holder arm of the aerial platform is always assigned to a base bearing, which, however, has helical teeth on the outer ring for coupling to a worm screw; this configuration is very compact, particularly in height, well protected and lubricated and simple to install.

The worm shaft and helical worm gear are both made of steel and the compatibility of meshing in relation to wear, overheating, risk of seizure is acceptable thanks to the low rotation speed, the long breaks of inactivity between one positioning of the basket and the next, the grease lubrication and the various heat/surface treatments in the respective materials.

The housing in which the worm-screw-helical worm gear pair is enclosed has both a protective function and a load-bearing function, in particular as a support for the worm shaft and the motor that moves it (mainly an orbital hydraulic motor); said housing is usually made of steel or special cast iron to withstand the heavy stresses to which it is subjected in applications on earth-moving machinery or building site in general.

The task of the manufacturers of aerial platforms intended for vehicles suitable for road traffic is to bring the weight of the complete equipment that is installed within the maximum capacity allowed by the vehicle.

The continuous and progressive limitations on the emissions of the diesel engines equipped in these vehicles have led to weighing down on the engines themselves, either due to the accessories designed to reduce particulate matter, or due to an increase in the engine's displacement to maintain the same power target: as a result, with the same total mass, the vehicle must allow a lower payload.

At this point, to avoid penalizing the performance of the aerial platform by reducing dimensions, for example height and/or outreach, or by limiting the capacity of the basket, the manufacturers try to lighten the structural parts with higher performance materials, shifting the weight reduction request to suppliers of commercial parts, primarily manufacturers of slewing mechanisms.

For these reasons, a first step at the level of the slewing mechanism was the transition from steel or cast iron transmission housings to aluminium alloy housings, keeping the internal components and related materials almost unchanged, i.e. with an inner ring and an outer ring of the steel base bearing coupled on one or more rows of balls that roll on tracks with a specific four-contact geometry for bearings that must simultaneously support axial, radial loads and tipping moment.

Following further and continuous requests to lighten the slewing mechanism, the present solution was reached in which it was sought to eliminate the largest number of steel components; this led to abandoning the rolling bearing and replacing it with suitable radial and axial sliding bearings.

The inner ring and outer ring of this new base bearing are made of high mechanical strength aluminium alloy, the helical worm gear (outer ring) undergoes further wearproof surface treatment; the performance is then guaranteed by the operation of the oil bath transmission that affects both the sliding bearings and the worm-screw-helical worm gear pair.

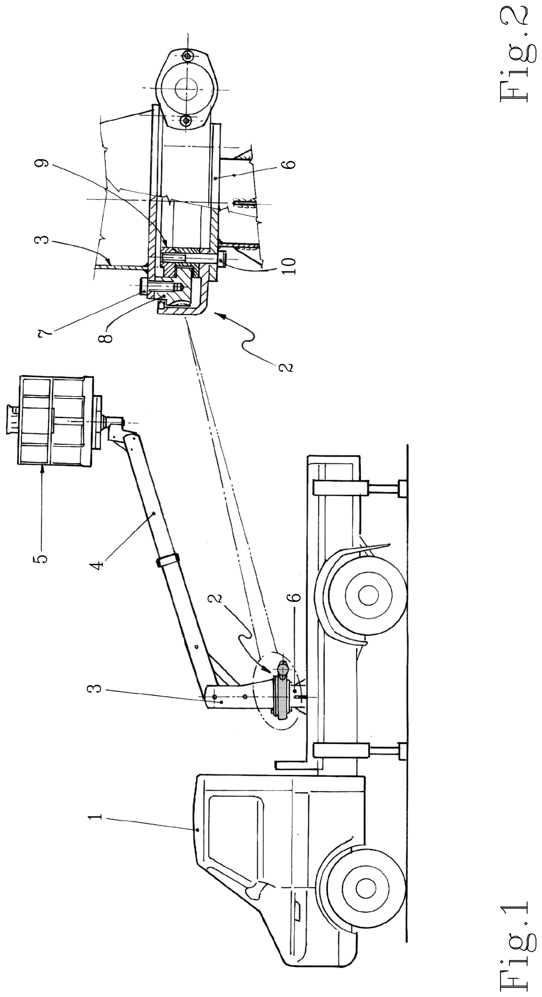

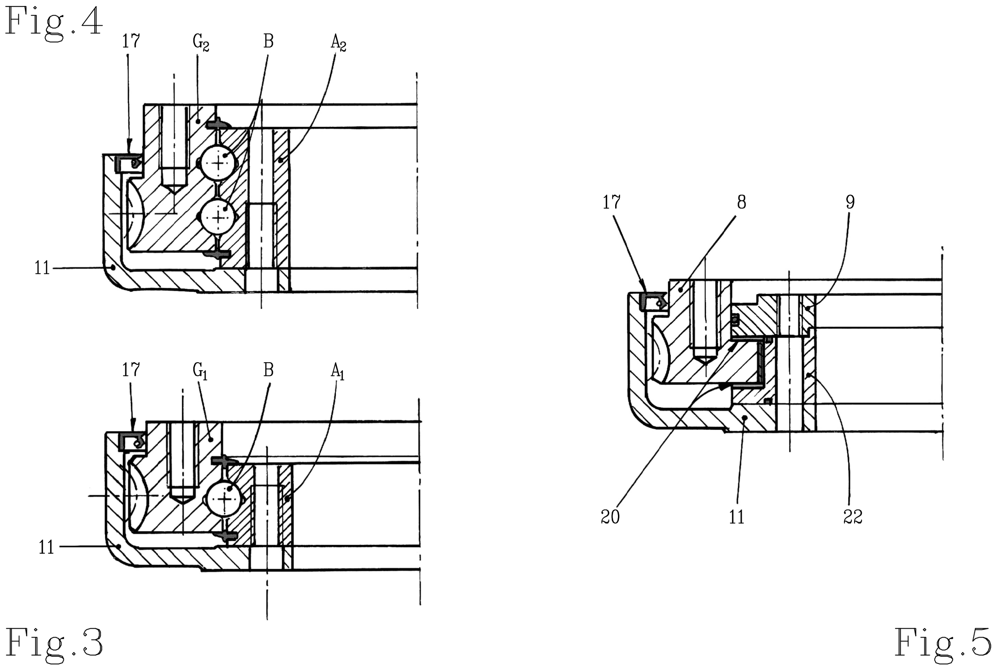

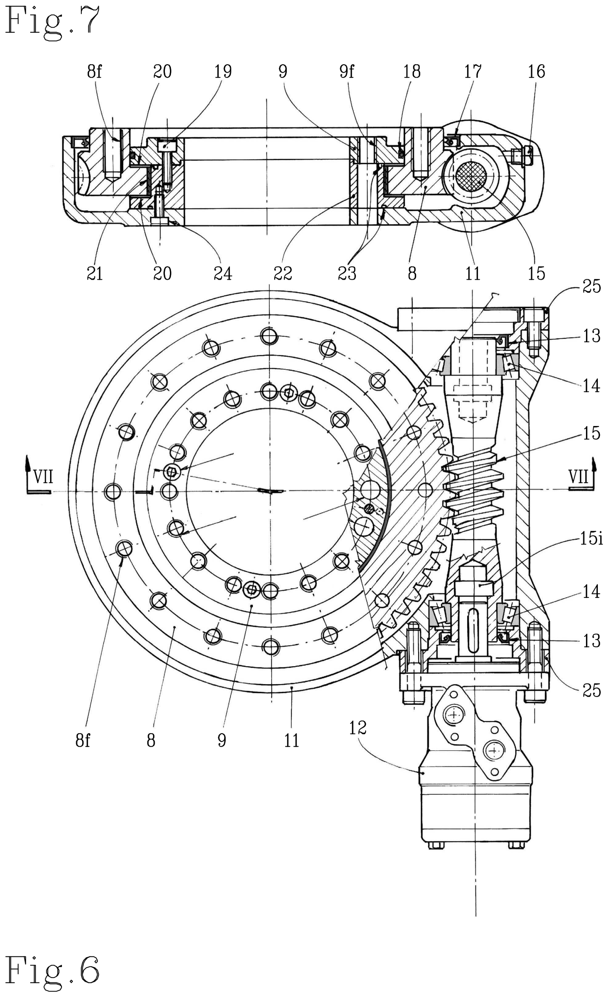

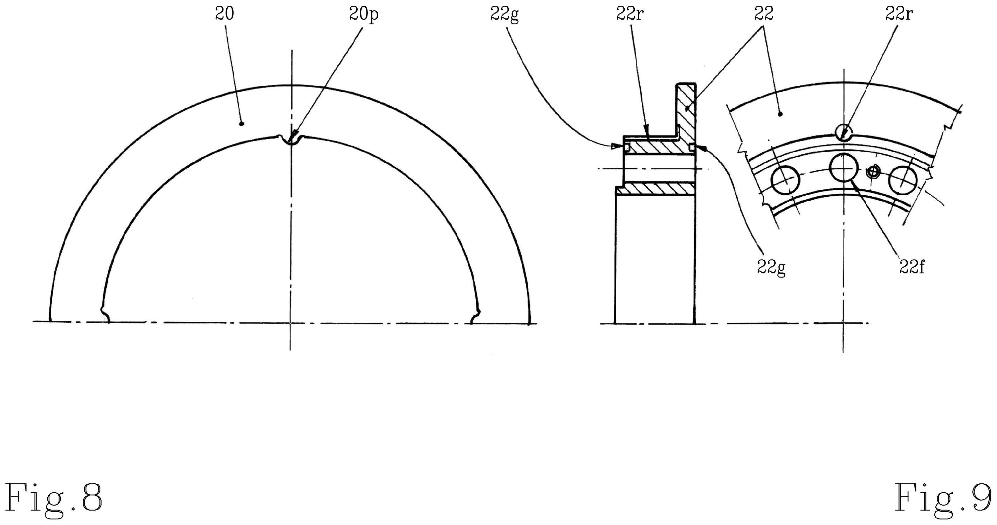

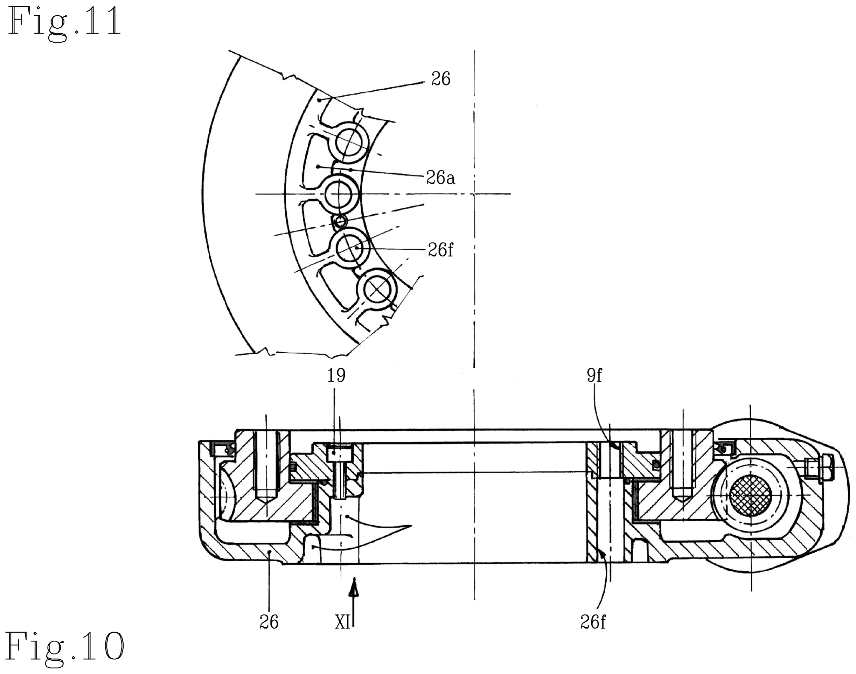

The invention is described with the aid of 5 drawing tables with the following contents:
- Table 1 shows the context of the application of the present slewing mechanism on a vehicle equipped with an aerial platform
- Table 2 compares, by means of partial cross-sections, the slewing mechanisms representing the state of the art (Figures 3 and 4) and the new proposed solution (Fig. 5)
- Table 3 depicts the new mechanism complete with hydraulic motor in a partially sectioned view and in its main cross-section
- Table 4 shows in detail the axial centre plate on which the rotation occurs (Fig. 8), the relative anti-rotation system (Fig. 9) and the ring on which it is centred
- Table 5 proposes a solution with a new housing layout and further lightening.

The slewing mechanism 2 in question consists essentially of three main sub-mechanisms:
- the transmission housing 11 in aluminium alloy capable of ensuring perfect sealing of the lubricating oil
- the motorized shaft with the worm screw 15
- the base bearing whose outer ring, helical worm gear 8, has the teeth to couple with the aforementioned worm screw.

The transmission housing 11 has the shape of a circular cup capable of containing the base bearing and with a wide opening in the centre of the bottom; it has a lateral overlay, in the form of a sleeve arranged tangentially on the cylindrical mantle of the cup, in which the worm screw is housed.

The bottom has a set of holes for the passage of the fixing screws 10 and some holes with a groove for the screws 24 intended for the preliminary fixing of the base bearing inside said housing.

The seats for the oppositely mounted conical bearings 14 with an X arrangement are housed in the sleeve; they are axially constrained by the pair of flanges 25; the sealing rings 13 are housed on said flanges and the hydraulic motor 12 can be flanged on their outer face.

The worm screw 15 is symmetrical both in construction and as an assembly inside the sleeve of the transmission housing 11; the cylindrical holes with key-groove, for coupling to the motor drive shaft, are present on both ends so it is possible to apply the hydraulic motor 12 indifferently both to the right and to the left.

The reliefs with groove 15i, necessary for constructive needs in the creation of the key-grooves, are deliberately of superabundant dimensions so as to generate a lightening of the screw shaft; the conical tapering of the worm shaft 15 starting from the central thread turns also contributes to further lightening due to the fact that said worm screw is made of steel with a high specific weight.

The new base bearing, proposed with the aim of achieving considerable lightening of the slewing mechanism, has some components made of aluminium alloy and duly heat-treated to achieve a high mechanical strength, comparable to that of a carbon steel.

The main components of the present base bearing are: the centring collar 22, the helical worm gear 8, the closing and fixing flange 9, the axial centre plates 20 and the bushing 21.

The centring collar 22 consists of a flange surmounted by a cylindrical hub and with a large central hole with a diameter equal to that on the bottom of the transmission housing 11; this cylindrical section acts as a guide pin for the helical worm gear 8 which is inserted therein after interposing the bushing 21 and acts as a support for the radial loads that said worm gear transmits.

The flange offers ample support on the bottom of the housing and axially supports the helical worm gear 8 after interposing the axial centre plate 20. This collar 22 is made of aluminium alloy and is obtained from extruded bar or hot moulded, heat treated to have fair mechanical strength: by way of example it could be made of alloy 6060 or 6082 (known as Anticorodal) or equivalent alloys.

The hub of said collar is crossed by a set of through holes 22f, the lower face of its flange has some threaded holes in which the screws 24 engage, the upper face of the hub has the threaded holes for prefixing by means of the screws 19 of the flange 9; on said faces, outside the set of holes mentioned above, there are the front grooves within which the OR rings 23 ensure the lubricating oil tight sealing.

Another very important constructive detail that distinguishes the hub of the centring collar 22 are the grooves or bevels 22r obtained on its cylindrical part: they have the function of preventing the rotation of the axial centre plates 20 whose protuberances 20p couple to said bevels.

In the absence of this albeit modest anti-rotation constraint, there is a risk that, due to the sliding friction and the viscosity of the oil, the axial centre plates 20 are dragged in rotation, damaging the hub itself by abrasion until a circumferential furrow is generated with the release of harmful metal particles.

The key component of the base bearing that is being described is the helical worm gear 8; which has the main functions assigned that distinguish a slewing mechanism intended for an aerial platform for the performance of which, in the context of a lightened slewing mechanism, a heat-treatable aluminium alloy had to be used to obtain a high mechanical strength.

The commercial aluminium alloy that lends itself to the production of the raw worm gear by hot moulding and subsequent quenching and natural ageing is 7075 (Ergal type).

The mechanical characteristics obtainable ensure: resistance of the helical teeth to breakage, tightness of the thread of the holes 8f with grip lengths 1.3 / 1.5 times the diameter D of the screw, ability to support a tipping moment no less than that of an equivalent base bearing with two rows of balls.

With regard to the wear resistance in the worm gear/helical worm gear meshing, there is the great benefit of oil lubrication to which are added the wearproof characteristics of the hard anodisation of the worm gear (hard anodic oxidation, depth 50 micro-millimetres).

The possibility with this type of material and treatments of falling within the performance required in the application field of aerial platforms is favoured by the fact that for said machines, the dynamic torque required from the slewing mechanism does not reach very high values due to the following operating conditions:
- low rotation speed: the movement of the basket must not cause discomfort for the operator
- rotation cycles of short duration and limited angular amplitude: the basket holder arm rarely makes a complete rotation of 360°
- breaks between one positioning cycle and the next that exclude the heating of the gear and/or lubricating oil
- modest torque deriving from the possible tilt of the rotation axis: the Safety Regulations impose the maximum limit of +/- 5°.

The closing and fixing flange 9 has the task of axially constraining the helical worm gear 8 and of holding the tipping moment that is discharged on the slewing mechanism; it consists of a circular ring with a set of threaded holes 9f, some holes for housing the screws 19, an annular groove seat for O Ring or X Ring sealing rings 18.

It must support the load deriving from the tipping moment and must ensure an adequate gripping thread length between holes 9f and fixing screws 10. For the choice of the material between steel or aluminium alloy for this flange, the compromise must be reached between lightness but higher cost with aluminium alloy or a greater weight with steel ring.

With steel, the thickness of the ring is reduced as the length of the gripping thread of the fixing screws 10 on the flange 9 can be reduced to 1.0 times the diameter D of the screw.

In the assembly phase of the helical worm gear 8 on the centring collar 22, the following are inserted in sequence: the first axial centre plate 20, the bushing 21 that acts as a radial sliding bearing, the second axial centre plate 20, the OR ring 23 on the upper face of the hub, the closing and fixing flange 9 and finally the screws 19.

It is verified that once the screws 19 are fully tightened, the helical worm gear 8 is free to rotate freely and has a reduced axial clearance.

At this point the base bearing is inserted inside the transmission housing 11, not forgetting the second OR ring 23, the helical worm gear 8 is brought closer to the worm screw 15 and when the coupling clearance is correct the screws 24 are tightened fully.

The function of these screws 24 is to keep the toothed worm gear in position until the slewing mechanism 2 is installed on the fixed support 6 on the vehicle 1; the screws 10 will then fix bundled the base bearing plus the transmission housing 11 on the support 6.

Brief mention is made of the materials of the sliding bearings on which the helical worm gear 8 rotates: the bushing 21 which acts as a radial bearing can be made of plastic material such as acetal resin or phenolic resin. It can be manufactured either as a whole ring or as a cut ring, such as the elastic guide bands usually used to guide and ensure the sliding of stems and pistons in hydraulic cylinders.

In the context of the present slewing mechanism, their functionality is ensured by both the presence of lubricating oil and by the low sliding speed (rotation less than 1 rpm).

The axial centre plates 20 can be metallic, obtained from thin flat plates (1 - 2 mm thick sheets) both to limit their weight and to allow the centre plates themselves to assume a perfect flat configuration when they are coupled under load to the respective support surfaces; as a material, cold-calibrated hardened bronze or hardened carbon steel (known as blued) can be adopted.

Alternatively, for the axial centre plates 20, suitably filled synthetic/ plastic materials such as acetal resin (Delrin), phenolic resin, nylon and produced by injection with suitable grooves on the faces on which the sliding occurs can be evaluated to optimize lubrication.

Further lightening, accompanied by considerable economic savings, is achieved with the creation of the transmission housing complete with centring collar or with hub integral with the housing as per Table 5.

In the new housing 26, lightening recesses 26a can then be made at two different depths; on the lower face of the housing (flanging plane), a set of rings around the holes 26f and a complete peripheral circular rib are left to define the useful support surface.

In this version, in which the centring collar 22 is eliminated, all the other components are unchanged; the only variation concerns the assembly sequence as the base bearing is not pre-assembled but the bearings, the worm gear and the flange are mounted directly on the housing in the absence of the worm screw.

The worm screw 15 is subsequently introduced through the openings of the sleeve and its bundle closure and the pre-loading of the conical bearings 14 is carried out through the flanges 25 and any calibrated shoulder shims.

Another advantage of this lightened slewing mechanism, with respect to the traditional one with ball base bearing, is the reduced maintenance deriving from the perfect hermetic tightness of the mechanism, and from the oil bath lubrication.

In the mechanisms with base ball bearing, the lubrication is mainly with grease; they require frequent re-lubrication both to re-introduce grease on the ball track and on the gear but above all to expel, under the effect of the pumping pressure, the contaminated or exhausted grease from the mechanism; it comes out deforming the lip edges of the protection seals. On the other hand, in the present solution the oil replacement is carried out less frequently and is carried out quickly through conventional drainage and loading caps and occurs in a total and not partial manner as in the grease system.

The present description is mainly based on the principle of replacing a base bearing with steel rings, with one or two rows of balls, with a new, much lighter base bearing because it is constructed with aluminium rings and sliding bearings and on how the performance necessary for the application on aerial platforms can be achieved.

The possibility of a different, further lightened transmission housing was also mentioned: all this does not exclude the possibility of creating different slewing mechanism layouts with the same innovative concept of high-strength aluminium alloy components.

## Claims

1. Worm slewing mechanism comprising:
- a transmission housing (11) in aluminium alloy;
- a centring collar (22);
- a flange (9) for closing and fixing;
- a helical worm gear (8);
- a bushing (21) acting as a radial sliding bearing;
- two axial centre plates (20) acting as sliding thrust bearings;
- at least two sets of pre-assembly screws (19) and (24);
- a worm shaft (15);
- a hydraulic motor (12)
**characterized by** comprising a helical worm gear (8) in aluminium alloy provided with a wearproof coating, able to withstand axial, radial loads and tipping moment which, centred by the bushing (21) which acts as a radial bearing, guided by the axial centre plates (20), supported by the centring collar (22), is constrained axially by the flange (9) to said centring collar by means of the pre-assembly screws (19).

2. Slewing mechanism as per claim 1 **characterized in that** the helical worm gear (8) has external helical teeth able to mesh with the worm shaft (15) and that said teeth undergo wearproof coating treatment.

3. Slewing mechanism as per claims 1 and 2 **characterized in that** the helical worm gear (8) is axially constrained on a first axial centre plate (20) between a first lower face thereof, facing downwards in use, and a flange of the centring collar (22) and, at a second face, facing upwards in use, it is constrained by the flange (9) with a second axial centre plate (20) in between and where said flange (9) is housed in a groove of said worm gear; the radial guide, on which the helical worm gear (8) slews, consists of a bushing (21) in resin.

4. Slewing mechanism as per claims 1, 2 and 3 **characterized in that** the helical worm gear (8) has, on a face of the ring part that projects from a retaining ring (17), facing outwards in use, a set of threaded blind holes (8f) for fixing a base structure (3) of an aerial platform to said worm gear by means of screws (7).

5. Slewing mechanism as per claims 1 and 3 **characterized in that** the axial centre plates (20) comprise a set of ridges or protuberances (20p) formed on their inner perimeter, configured to mesh with corresponding bevelled cavities in the cylindrical hub of the centring collar (22) and able to prevent the centre plates themselves from slewing, through drag due to the viscosity of the oil.

6. Slewing mechanism as per claims 1 and 3 **characterized in that** it comprises a closing and fixing flange (9) on which there is a set of threaded holes (9f) and grooves for the screws (19) and **in that**, by means of said screws, the flange (9) is arranged to fasten and axially constrain the helical worm gear (8) on the centring collar (22) allowing it a small amount of axial clearance, into the set of threaded holes (9f) of said flange the screws (10) mesh, which fasten the entire slewing mechanism (2) to a fixed support (6) on a vehicle (1).

7. Slewing mechanism as per the previous claims, wherein the set of said flange (9) and said screws (19) defines a base bearing arranged in the transmission housing (11) and pre-fastened there by means of the screws (24) which are able to keep the teeth of the helical worm gear (8) correctly positioned with respect to the correct meshing distance, said screws (10) being able to fix the slewing mechanism (2) to the support (6) of the vehicle (1).

8. Slewing mechanism as per claim 6, wherein the flange (9) is made of thinner steel and with a lightweight geometry or thicker aluminium alloy as a function of the length of the threaded section engaged by the screw (10) and the mechanical strength to withstand axial loads and tipping moment.

9. Slewing mechanism as per claim 1 **characterized in that** the worm shaft (15) comprises cylindrical holes with key-groove for coupling with the shaft of the hydraulic motor (12) at both ends and **in that** said holes have spacious lightening reliefs in the form of grooves (15i) and **in that** the external profile of said worm shaft is shaped with conical tapers according to the proportioning criterion for uniform strength.

10. Slewing mechanism as per claim 1 **characterized in that** it comprises retaining rings of both the lip seal type in positions (13), (17) and O-Ring or X-Ring type in positions (18), (23), configured to ensure the lubricant oil tight sealing in the transmission housing (11).

11. Slewing mechanism as per the previous claims, **characterized in that** the former centring collar (22) is integrated with the new transmission housing (26) which can comprise a set of recesses (26a).
